# EUROPEAN PATENT APPLICATION

(11) **EP 3 696 764 A1**
(43) Date of publication of application: **19.08.2020**
(21) Application number: 20157535.4
(22) Date of filing: 14.02.2020
(51) Int. Cl.: G06Q 40/00

(54) **DATA PROCESSING**

(30) Priority: 17.02.2019 EP 19157607
(71) Applicant: Sage Global Services Limited, Newcastle upon Tyne, Tyne and Wear NE13 9AA (GB)
(72) Inventor: JOUHIER, Bruno Claude Jean-Marie, 92257 La Garenne-Colombes Cedex (FR)
(74) Representative: Definition IP Limited

(57) **Abstract**

A data processing system. The system is operable to receive a calculation regime identifier identifying a calculation regime and responsive to receipt of the calculation regime identifier, identify one or more code packages stored in a package repository associated with the calculation regime. The system is further operable to assemble code from the one or more code packages and instantiate a calculation engine by compiling the assembled code. When instantiated, the calculation engine is operable, on receipt of a calculation request comprising calculation input data, to perform calculations associated with the calculation regime and defined in the one or more code packages on the calculation input data to generate calculation results and output the calculation results.

## Description

### Technical Field

The present invention relates to systems and methods for processing data. In certain embodiments, the invention relates to systems and methods for processing data to perform payroll calculations.

### Background

It is commonplace for data processing associated with, for example, accountancy and actuarial activities, to be performed by computer systems running suitable software applications. To increase efficiency and reduce cost it is desirable to design and deploy such software applications in a way that avoids unnecessary complexity and allows updates and modifications to the code to be undertaken quickly and reliably and with a minimised risk of errors being introduced.

However, certain types of data processing tasks pose a number of challenges. An example is the computing tasks for generating payroll data.

The task of generating payroll data typically comprises converting a gross salary amount into a net salary amount, typically for paying into an employee's bank account. Further amounts are also typically calculated such as amounts for paying as pension contributions, taxes, sick pay, maternity/paternity pay and so on.

Whilst, broadly, the same types of calculations are performed wherever an employee is located (e.g. some form of tax calculation is almost always undertaken) the specific payroll calculations that are performed differ from jurisdiction to jurisdiction. This is because the laws and regulations relating to tax, sick pay entitlements, maternity/paternity entitlement, pensions requirements, health insurance etc differ from jurisdiction to jurisdiction.

To reduce complexity and increase efficiency, it would be desirable to provide a single software application for performing payroll type calculations for multiple jurisdictions. However, the differences between jurisdictions means this is difficult. This difficultly is compounded by the fact that the laws and regulations relating to payroll calculations are subject to frequent change necessitating frequent changes to payroll software applications.

It is an aim of certain embodiments of the invention to address the difficulties associated with providing software applications for undertaking calculation tasks such as payroll calculation tasks.

### Summary of the Invention

In accordance with a first aspect of the invention, there is provided a data processing system. The system is operable to receive a calculation regime identifier identifying a calculation regime and responsive to receipt of the calculation regime identifier, identify one or more code packages stored in a package repository and associated with the calculation regime. The system is further operable to assemble code from the one or more code packages and instantiate a calculation engine by compiling the assembled code. When instantiated, the calculation engine is operable, on receipt of a calculation request comprising calculation input data, to perform calculations associated with the calculation regime and defined in the one or more code packages on the calculation input data to generate calculation results and output the calculation results.

Typically, the system is provided by at least one application server.

Optionally, the calculation engine is instantiated as a stateless application.

Optionally, the one or more code packages are one or more of a plurality of code packages in the package repository, each code package associated with a different calculation regime.

Optionally, the code package is written in TypeScript.

Optionally, the system further comprises a code editor for generating and modifying the code packages.

Optionally, the calculation request is received from a remote application.

Optionally, the calculation regime identifier is received from the remote application.

Optionally, the calculation engine is a payroll calculation engine.

Optionally, the system is operable to de-instantiate the calculation engine on completion of the calculations on the calculation input data.

In accordance with a second aspect of the invention, there is provided a data processing method. The method comprises receiving a calculation regime identifier identifying a calculation regime and, responsive to receipt of the calculation regime identifier, identifying one or more code packages stored in a package repository associated with the calculation regime. The method further comprises assembling code from the one or more code packages; instantiating a calculation engine by compiling the assembled code; receiving a calculation request comprising calculation input data; performing, by the calculation engine, calculations associated with the calculation regime and defined in the one or more code packages on the calculation input data to generate calculation results, and outputting the calculation results.

Optionally, the calculation engine is instantiated as a stateless application.

Optionally, the one or more code packages are one or more of a plurality of code packages in the package repository, each code package associated with a different calculation regime.

Optionally, the code package is written in TypeScript.

Optionally, the calculation request is received from a remote application.

Optionally, the calculation regime identifier is received from the remote application.

Optionally, the calculation engine is a payroll calculation engine.

Optionally, the method further comprises de-instantiating the calculation engine on completion of the calculations on the calculation input data.

In accordance with certain aspects of the invention a technique is provided for instantiating instances of a calculation engine on a centralised computing system (for example a "cloud platform").

Certain calculations, such as payroll calculations, are performed multiple times (e.g. monthly payroll calculations made on an employee by employee basis) but the specific calculation tasks associated with the calculation regime are subject to continual change (e.g. as tax legislation is changed on a jurisdiction-by-jurisdiction basis).

Conventionally, for performing such calculations, data defining the calculation tasks associated with different calculation regimes are maintained in one or more databases. This data is changed as and when there is some change to the relevant calculation regime (e.g. a change in tax law in a particular jurisdiction).

This typically necessitates complex database management, particularly if the data defining the calculation tasks associated with different calculation regimes are frequently updated. Testing and "versioning" of changes made to the database data is difficult. For example, it is difficult to test ahead of deployment whether changes to the database data will generate errors. Further, if errors are introduced due to changes in the database data, there is typically only limited functionality available to revert to the previously working version of the database data.

In contrast with conventional techniques in which data defining the calculation tasks associated with different calculation regimes are stored in a database, in accordance with examples of the present technique, such data is defined in discrete code packages published to a package manager and a calculation engine is instantiated whenever a calculation task needs to be performed. Code from the relevant code package or code packages is incorporated into an instance of the engine on instantiation. By defining the data defining the calculation task associated with a calculation regime in a code package, the versioning and testing advantages of package manager-based code development can be used to develop and update different calculation regimes.

Further, in this configuration the engine can be "stateless". The engine itself can be developed as simplified "light-weight" code and can be very readily "horizontally scaled". That is, instances of the calculation engine can be instantiated as and when required and then de-instantiated when the calculation task is complete. This ensures that processing resource is used efficiently.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a schematic diagram of a conventional "cloud-based" implementation of a system for performing calculation tasks;
Figures 2a, 2b and 2c provides schematic diagrams depicting the operation of a data processing system arranged in accordance with certain embodiments of the invention;
Figure 3 provides a schematic diagram of another data processing system arranged in accordance with certain embodiments of the invention, and
Figure 4 provides a diagram of a flow diagram of a method in accordance with certain embodiments of the invention.

### Detailed Description

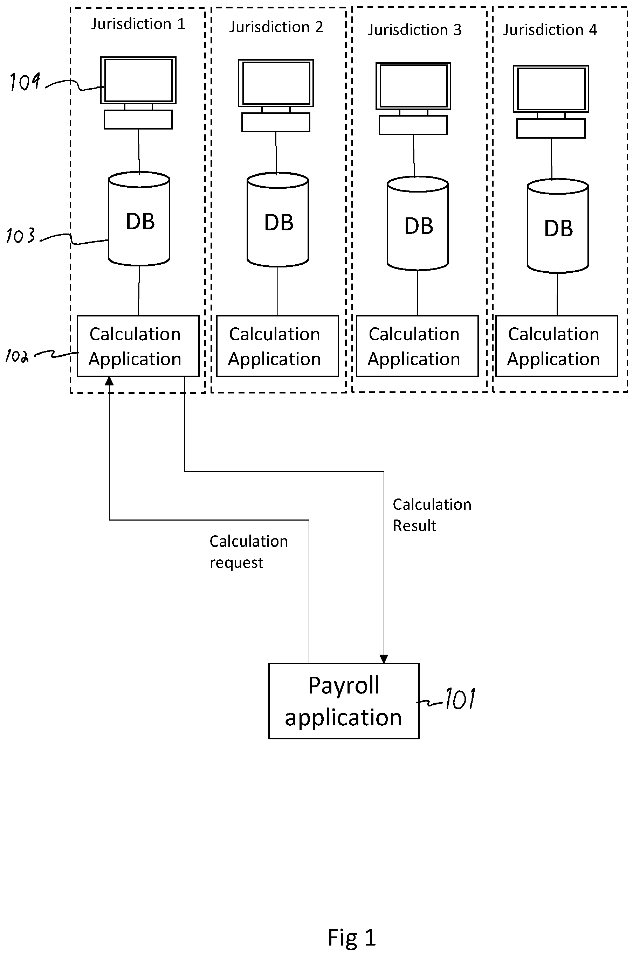

Figure 1 provides a schematic diagram of a conventional "cloud-based" implementation of a system for performing calculation tasks such as generating payroll data.

A payroll application 101 running on a client device, such as a server or personal computer, generates a calculation request, for example a request to convert a gross salary amount to a net salary amount. The payroll application 101 communicates the calculation request to a calculation application 102 hosted on a server. The calculation application performs a calculation task associated with the calculation request and communicates a calculation result back to the payroll application 102.

Data defining the calculation task, such as data specifying the formulas, conditions and variables that define tax calculations, pension calculations, maternity/paternity pay allowances and so on are maintained in a database 103 which is maintained by a database administrator via an administrator interface 104.

Whenever the formulas, conditions and variables that define tax calculations are changed/updated (which is common and occurs frequently with calculation tasks for generating payroll data) the corresponding data defining the calculation task stored in the database must be changed. In order to change this data, the database administrator makes the change via the administrator interface 104. Updating the data that defines the calculation task stored in the database in this way requires expertise in database management/programming and provides little opportunity to test/error check the updates to the data before they are made.

Further, as depicted schematically in Figure 1, for a cloud implementation in which multiple payroll jurisdictions are accommodated, a calculation application is typically provided for each jurisdiction with a separate database and a separate database administrator interface (Jurisdiction 1, Jurisdiction 2, Jurisdiction 3, Jurisdiction 4) each implementing a different calculation regime. These applications are typically independent of one another and typically permanently deployed. This can consume considerable server resources.

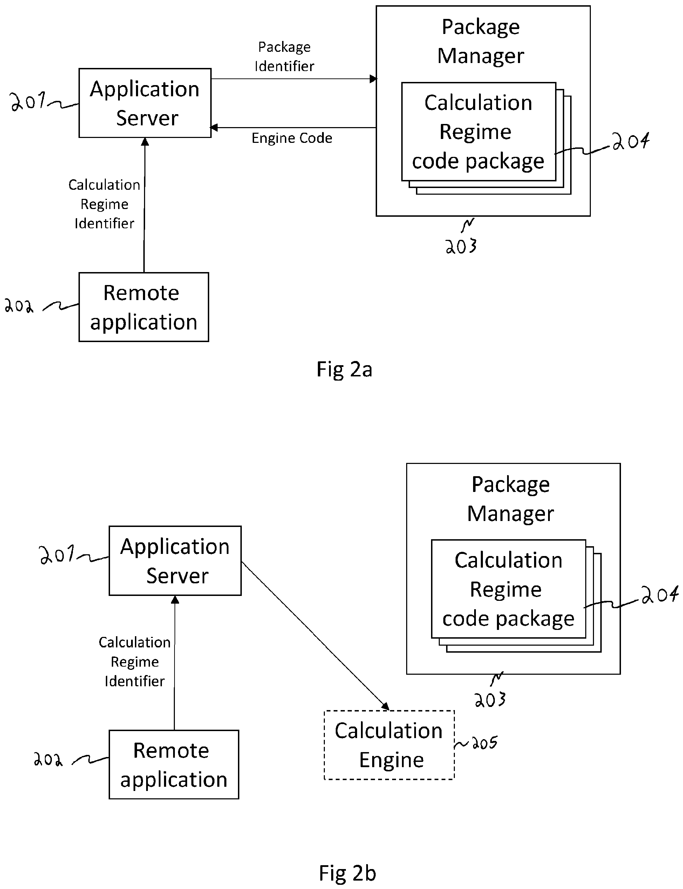

Figure 2a provides a schematic diagram depicting the operation of a data processing system arranged in accordance with certain embodiments of the invention.

The data processing system is arranged to instantiate a calculation engine which is operable to perform a calculation task on calculation task input data and to generate corresponding calculation output results. The calculation task is associated with a particular calculation regime (for example the tax regime of a particular jurisdiction) and may frequently be changed.

An application server 201 is arranged to communicate data to and from a remote application 202.

The remote application 202 (typically running on a remote computing device) is arranged to communicate to the application server a calculation regime identifier. The application server 201 is arranged to identify from the calculation regime identifier one or more code packages from a plurality of code packages 104 stored in the package repository of a package manager 203. The identified code packages contain code which implement calculations associated with the identified calculation regime.

It will be understood that a code package is a portion of code that is arranged to be stored as a discrete package in a package repository and to be combined with one or more other code packages, via a package manager, to provide an application.

It will further be understood that a package repository is a storage location for code packages. A package repository allows code packages that are stored in the package repository to be selectively accessed by a package manager.

It will further be understood that a package manager is a tool that manages one or more of: installing, updating, configuring or removing a package-based application based on code packages stored in a package repository.

The application server is arranged to communicate the identified code packages associated with the calculation regime to the package manager 203. The package manager 203 is arranged to assemble code from the identified code packages and communicate the assembled code back to the application server 201.

As depicted schematically in Figure 2b, the application server 201 is arranged to compile and run the assembled code received from the package manager 203 to instantiate a calculation engine 205. In examples in which the code is JavaScript code, the code is compiled when it gets loaded by, for example, a node.js engine in accordance with just-in-time (JIT) compilation, as is known in the art.

The calculation engine 205 comprises code associated with the calculation regime as described above and is instantiated as a "stateless" application. The calculation engine is stateless in that it is instantiated to perform a specific calculation task or a series of specific calculations tasks and once complete is de-instantiated (destroyed). Typically, user data is processed in-memory by the calculation engine and typically there is no requirement for user data to be stored permanently on the application server 201.

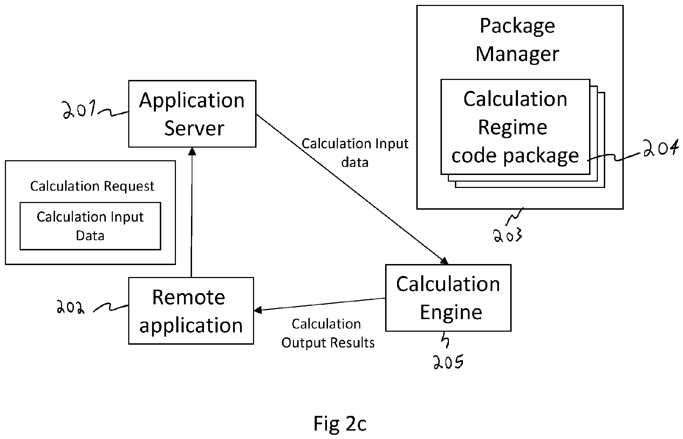

As depicted schematically in Figure 2c, once the calculation engine is instantiated, a calculation request containing calculation input data is communicated from the remote application 201 to the application server 202. The application server communicates the calculation input data to the instantiated calculation engine 205 which undertakes calculations of the calculation task associated with the calculation regime on the calculation input data and generates calculation output results. The calculation output results are communicated to the remote application 201. The calculation engine 205 can then be de-instantiated releasing processing and memory resource.

Advantageously, changes in the data defining the calculation task can be changed by changing/updating code packages managed in the package manager rather than being made directly to a database in which such data is stored. This means that the testing and version control functionality associated with package-based coding can be used to reduce the chance that errors will be introduced into the calculation task as a result of changes made to the data defining the calculation task, and, if such errors are made, they can be readily reversed.

Further, by implementing the calculation engine as a temporary "stateless" application which is only instantiated when a calculation task is to be performed the over-all resource consumed on the application server is reduced. Further, the system can be readily "scaled" up or down based on demand (i.e. its capacity can be increased or decreased) simply by changing the amount of available server resource and instantiating more or fewer calculation engines.

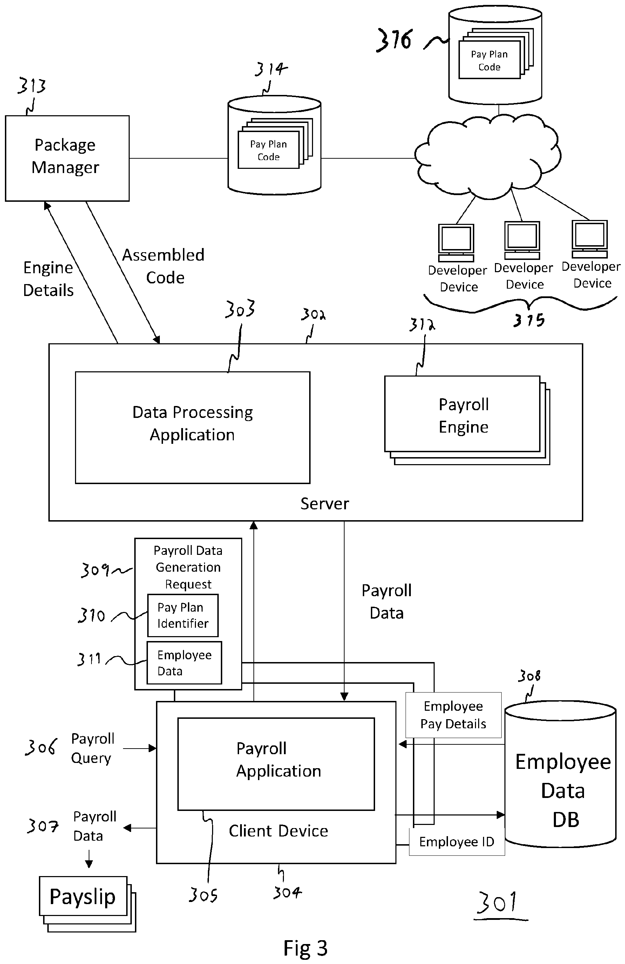

These advantages are highlighted further with reference to a more specific implementation of a system in accordance with embodiments of the invention described with reference to Figure 3.

Figure 3 provides a schematic diagram a data processing system 301 arranged in accordance with certain embodiments of the invention.

The system 301 includes an application server 302 on which is running a data processing application 303. The system 301 further includes a client device 304 on which is running a payroll application 305.

The payroll application 305 is arranged to receive a payroll query 306. The payroll query 306 typically includes employee information which uniquely identifies data records associated with the employment of one or more employees.

In response to receipt of the payroll query 306, the payroll application 305 is arranged to generate corresponding payroll data 307. In a simple example, this may be the data necessary to generate a series of pay slips at the end of the month for the employees of a company. Accordingly, the payroll data 307 typically includes information necessary to generate a monthly payroll slip for each employee, for example a net amount of money to be paid to each employee's bank account, amounts to be paid in tax, pensions etc.

To generate the payroll data 307 the payroll application 305, using the employee information from the payroll query 306, retrieves employee pay data records (for example salary information, pension contribution amounts, tax data and so on) associated with the employees in question from an employee data database 308. The payroll application 305 is arranged to then communicate a payroll data generation request 309 to the data processing application 303 running on the application server 302.

The payroll data generation request 309 includes employee pay data 311 (including, for example, information from the employee pay data records retrieved from the employee data database 308). The payroll data generation request 309 further includes a pay plan identifier 310.

The pay plan identifier 310 is a calculation regime identifier that identifies a legal jurisdiction in which the employee works (a payroll regime). For example, the pay plan identifier 311 may specify that the employees are employed under UK tax legislation.

In response to the receipt of the payroll data generation request 309, the data processing application 303 is arranged to instantiate a payroll engine 312. The payroll engine 312 is typically implemented as a "stateless" application. That is, it is typically instantiated to perform a specific payroll calculation or specific series of payroll calculations and is then de-instantiated (destroyed).

The system 301 comprises a package manager 313 which controls a package repository 314 containing a plurality of code packages.

To instantiate the payroll engine 312, the data processing application 303 sends code package details (typically a manifest file) to the package manager 313 identifying different code packages necessary to instantiate the payroll engine 312.

For example, the manifest file identifies a base code package containing base code for implementing the payroll engine 312 and one or more pay plan code packages which contain information relevant to performing payroll calculations associated with the legal jurisdiction in which the employee works.

The one or more pay plan code packages are typically identified by the pay plan identifier 310 in the payroll data generation request. However, it will be understood that the pay plan identifier 310 and the employee data 311 may be communicated separately.

On receipt of the manifest file, the package manager 313 retrieves the relevant code packages from the package repository 314 and assembles from them application code necessary for implementing the payroll engine 312. This application code is then communicated to the application server 302. For example, if the pay plan identifier 310 identifies the UK as the tax code jurisdiction, the package manager 313 retrieves one or more code packages associated with the UK tax calculations and in particular containing the calculation details necessary to correctly perform UK payroll calculations.

The application server 302 typically includes a compilation engine (not shown) which compiles and executes the code received from the package manager 313 to instantiate the payroll engine 312. In this way, the payroll engine comprises compiled code for performing, for example, UK payroll calculations.

The data processing application 303 passes the employee data 311 to the payroll engine 312 which then performs various payroll calculations and generates payroll data. This payroll data is then communicated from the application server 302 to the payroll application 305 and the payroll data 307 is then output by the payroll application 305.

The payroll application 305 is typically one of a plurality of payroll applications running on a plurality of client devices.

Each payroll application is operable to undertake the process detailed above to instantiate a payroll engine on the application server 302 to generate payroll data in response to a payroll query. Payroll engines for different jurisdictions can be readily instantiated on the application server by use of the relevant pay plan identifier in the payroll data generation request to identify relevant code packages.

Figure 3 further depicts a plurality of developer devices 315. Each developer device 315 has running thereon a developer application, typically provided by a suitable code editor.

The developer application running on each developer device 315 enables developers to write and update source code for implementing the payroll application and in particular for writing and updating code packages for implementing instances of the payroll engine 312. In certain examples the source written in TypeScript.

Source code under development is typically stored in a source code repository 316 and developed in accordance with package-based code development techniques.

Storing source code in this way enables multiple developers to collaborate on the source code. In particular, use of the source code repository provides functionality such as enabling version control (e.g. keeping records of previous versions of the source code enabling developers to revert to previous versions of the code) and branching and merging control (enabling the same source code to be worked on simultaneously by multiple developers). Further functionality includes error checking and code testing functionality allowing the source code to be rigorously tested ahead of deployment and further ancillary functionality enhancing developer collaboration such as developer commenting functionality.

Once the source code has been finalised, it is published from the code repository 316 as a package to the package repository 314. Typically, the source code is developed in TypeScript and is then transpiled to JavaScipt source code. This JavaScript source code is then published, in the code package, to the package repository 314.

Advantageously, assembling the code for the payroll engine using code packages means that the code can be developed using code package development techniques (e.g. the using the functionality provided by source code repositories).

The fact that such techniques can be used to develop the source code means that updates to the source code that must be made due to frequent changes in laws and regulations affecting payroll calculations can be developed and deployed with a reduced risk or errors.

Moreover, if an update to a code package does contain one or more errors, or on compilation causes a problem with the payroll engine, correcting this can be readily achieved by virtue of the "versioning" functionality associated with package-based code development where the problematic code package can be replaced by a previous correctly working version of the code package.

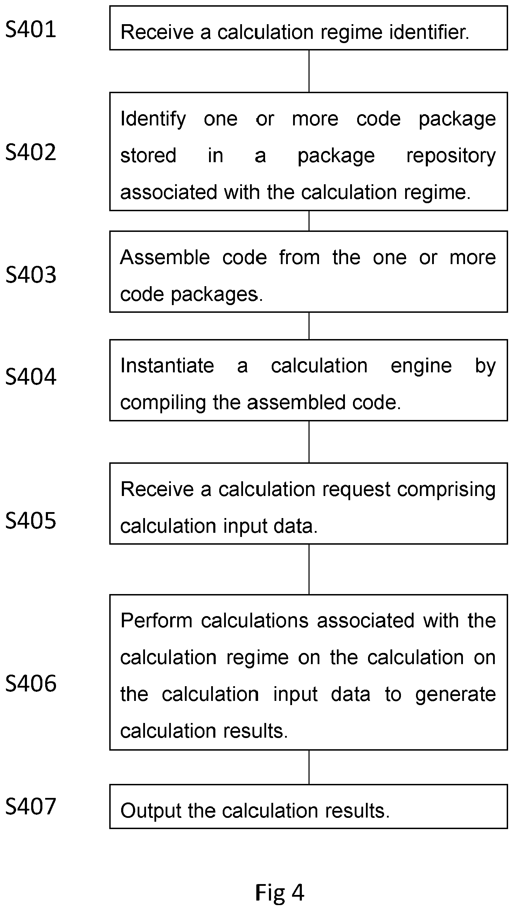

Figure 4 provides a flow diagram of a process for performing a data processing operation, for example the generation of calculation results associated with a payroll calculation task, in accordance with certain embodiments of the invention.

At a first step S401, a calculation regime identifier is received by a data processing device, for example an application server. At a second step 402, one or more code packages, associated with the calculation regime and stored in a package repository is identified. At a third step S403, code from the one or more code packages is assembled and at a fourth step S404, the assembled code is compiled to instantiate a calculation engine. At a fifth step S405, a calculation request is received which comprises calculation input data. At a sixth step S406 the calculations associated with the calculation regime and defined in the one or more code packages are performed on the calculation input data and calculation results are generated. At a seventh step S407, the calculation results are output.

It will be understood that the systems depicted in Figures 2a, 2b and 2c and Figure 3 can be implemented in any suitable way. For example, the client device may typically be a personal computer or client server connected, via a suitable data connection, such as the internet, to the application server. The client device and the application server may be in different physical locations or the same physical location. Similarly, the package manager and package repository may be implemented on the same physical device as the application server or on a different physical device. The application server on which the data processing application runs and on which the calculation engine runs may be the same physical device, or the processing associated with these components may be distributed across multiple physical devices using known distributed computing techniques.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.
It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A data processing system, said system operable to:
receive a calculation regime identifier identifying a calculation regime;
responsive to receipt of the calculation regime identifier, identify one or more code packages stored in a package repository and associated with the calculation regime;
assemble code from the one or more code packages;
instantiate a calculation engine by compiling the assembled code, wherein,
when instantiated, the calculation engine is operable, on receipt of a calculation request comprising calculation input data, to:
perform calculations associated with the calculation regime and defined in the one or more code packages on the calculation input data to generate calculation results, and
output the calculation results.

2. A data processing system according to claim 1, wherein the calculation engine is instantiated as a stateless application.

3. A data processing system according to claim 1 or 2, wherein the one or more code packages are one or more of a plurality of code packages in the package repository, each code package associated with a different calculation regime.

4. A data processing system according to claim 3, further comprising a code editor for generating and modifying the code packages.

5. A data processing system according to any previous claim, wherein the calculation request is received from a remote application.

6. A data processing system according to claim 5, wherein the calculation regime identifier is received from the remote application.

7. A data processing system according to any previous claim, wherein the calculation engine is a payroll calculation engine.

8. A data processing system according to any previous claim, wherein the system is operable to de-instantiate the calculation engine on completion of the calculations on the calculation input data.

9. A data processing method, said method comprising:
receiving a calculation regime identifier identifying a calculation regime;
responsive to receipt of the calculation regime identifier, identifying one or more code packages stored in a package repository associated with the calculation regime;
assembling code from the one or more code packages;
instantiating a calculation engine by compiling the assembled code;
receiving a calculation request comprising calculation input data;
performing, by the calculation engine, calculations associated with the calculation regime and defined in the one or more code packages on the calculation input data to generate calculation results, and
outputting the calculation results.

10. A method according to claim 9, wherein the calculation engine is instantiated as a stateless application.

11. A method according to claim 9 or 10, wherein the one or more code packages are one or more of a plurality of code packages in the package repository, each code package associated with a different calculation regime.

12. A method according to any of claims 9 to 11, wherein the calculation request is received from a remote application.

13. A method according to claim 12, wherein the calculation regime identifier is received from the remote application.

14. A method according to any previous claim, wherein the calculation engine is a payroll calculation engine.

15. A method according to any previous claim, further comprising de-instantiatiating the calculation engine on completion of the calculations on the calculation input data.
